# EUROPÄISCHE PATENTANMELDUNG

(11) **EP 1 688 684 A1**
(43) Veröffentlichungstag der Anmeldung: **09.08.2006**
(21) Anmeldenummer: 05000473.8
(22) Anmeldetag: 12.01.2005
(51) Int. Cl.: F24J 2/24, F24J 2/48

(54) **Absorberbauteil für solarthermischer Flachkollektor**

(71) Anmelder: SGL CARBON AG, 65203 Wiesbaden (DE)
(72) Erfinder: Christ, Martin, Dr., 86517 Wehringen (DE); Öttinger, Oswin, Dr., 86405 Meitingen (DE); Bacher, Jürgen, 86637 Wertingen (DE); Heuer, Dirk, 86150 Augsburg (DE)

(57) **Zusammenfassung**

Es wird Absorberbauteil für einen thermosolaren Flachkollektor bereitgestellt, in welchem die Wärmeträgerrohre (2) in eine Schicht (1) aus expandiertem Graphit eingebettet sind, deren der Sonneneinstrahlung zugewandte Oberfläche eine Absorberschicht (3) aufweist. Dadurch, dass die Rohre (2) komplett von Graphitexpandat umgeben sind, wird der Wärmeübergang zwischen Absorberschicht und Wärmeträgerflüssigkeit verbessert. Gdf. ist die der Sonneneinstrahlung abgewandte Oberfläche der Schicht (1) mit einer wärmedämmenden Schicht (6) versehen. Eine vorteilhaften Weiterentwicklung der Erfindung enthält zwischen der Schicht (1) und der Absorberschicht (3) eine Zwischenschicht (5) zur lateralen Wärmeverteilung. Die Erfmdung betrifft auch Halbzeuge für die Herstellung des Absorberbauteils. Die Halbzeuge können auch in Anlagen zur Abfuhr von Prozesswärme, zur Kühlung von Maschinen oder zur Strahlungsbeheizung oder Strahlungskühlung verwendet werden.

## Beschreibung

Die Erfindung betrifft ein Absorberbauteil für solarthermischen Flachkollektoren sowie Halbzeuge zur Fertigung dieses Bauteils.

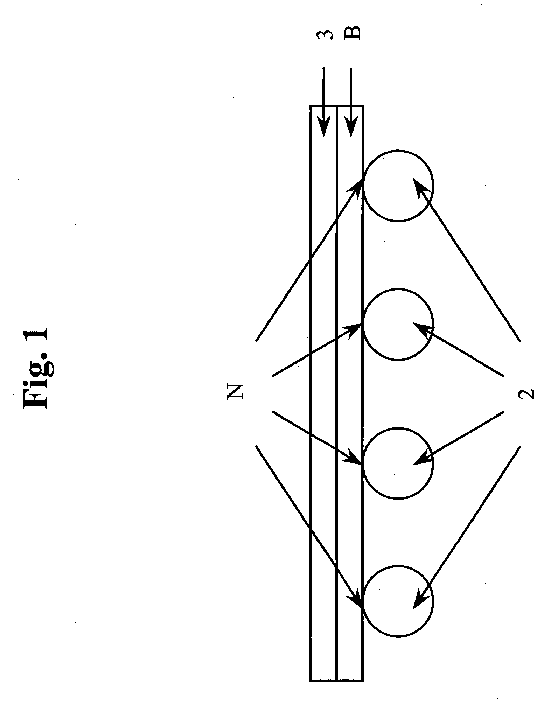

Flachkollektoren nach dem Stand der Technik enthalten ein Absorberbauteil (Figur 1) aus einem Blech B, typischerweise Kupfer- oder Aluminiumblech, dessen der Sonneneinstrahlung zugewandte Seite mit einer Absorberschicht 3 versehen ist und an dessen Rückseite Rohre 2 angebracht sind, die von einer Wärmeträgerflüssigkeit, z.B. Glykol, durchströmt werden. Diese Rohre 2, typischerweise Kupferrohre, sind mittels linearer Schweißnähte N oder Lötverbindungen am Absorberblech B befestigt. Die Schweißverbindungen werden vorwiegend mittels Ultraschall-, Plasma- oder Laserschweißen hergestellt.

Das Absorberbauteil liegt in einem Gehäuse in Form einer Wanne oder eines Rahmens mit Rückwand, das mit einem wärmedämmendem Material ausgekleidet ist. Typische Gehäusematerialien sind Aluminium, verzinktes Stahlblech oder glasfaserverstärkter Kunststoff, als Wärmedämmungsmaterialien werden Polyurethanschaum oder Mineralwolle eingesetzt. Die der Sonneneinstrahlung zugewandte Oberfläche ist mit einer transparenten Abdeckung, bevorzugt aus einem Glas mit einem hohen Transmissionsgrad für den kurzwelligen Spektralbereich, versehen. Weitere Informationen zum Aufbau von Flachkollektoren sind beispielsweise unter www.solarserver.de/wissen zu finden.

In der Absorberschicht 3 wird die einfallende Sonneneinstrahlung in Wärme umgewandelt. Die Wärme wird vom Absorberblech B über die Löt- oder Schweißnähte N auf die Rohrwände übertragen und dort von der Wärmeträgerflüssigkeit aufgenommen. Die so erwärmte Flüssigkeit überträgt die Wärme in einen Speicher oder zu einer anderen Nutzung.

Für die Wärmeleitung vom Absorberblech B zu den Rohren 2, die von der Wärmeträgerflüssigkeit durchströmt werden, steht nur die sehr geringe Kontaktfläche an den Schweiß- bzw. Lötnähten N zur Verfügung, daher ist der Wärmeübergangswiderstand zwischen Absorberblech B und Rohren 2 relativ hoch.

Die Aufgabe der vorliegenden Erfindung besteht darin, ein Absorberbauteil für Flachkollektoren bereit zu stellen, welches eine Erleichterung des Wärmeübergangs zwischen Absorptionsfläche und Wärmeträgerrohren ermöglicht.

Diese Aufgabe wird dadurch gelöst, dass die von der Wärmeträgerflüssigkeit durchströmten Rohre in eine Schicht aus Graphitexpandat eingebettet sind, deren der Sonneneinstrahlung zugewandte Oberfläche mit einer Absorberschicht versehen ist. Aufgrund der Einbettung der Rohre in Graphitexpandat steht die gesamte Rohroberfläche für den Wärmeübergang zur Verfügung, daher wird der Wärmeübergangswiderstand deutlich verringert.

Ein weiterer Vorteil ist der gegenüber dem Stand der Technik kompaktere und stabilere Aufbau, denn das erfindungsgemäße Absorberbauteil enthält keine Schweißnähte oder Lötverbindungen, welche potentielle mechanische Schwachstellen sind.

Eine weitere Aufgabe besteht darin, Halbzeuge bereitzustellen, die u.a. für die Fertigung des erfindungsgemäßen Absorberbauteils verwendet werden können.

Weitere Vorteile, Details und Varianten der Erfindung gehen aus der folgenden ausführlichen Beschreibung und den Figuren hervor.

Die Figuren zeigen
- Figur 1: Absorberbauteil aus einem thermosolaren Flachkollektor nach dem Stand der Technik
- Figuren 2a-2c: Ausführungsformen des erfindungsgemäßen Absorberbauteils für einen thertnosolaren Flachkollektor

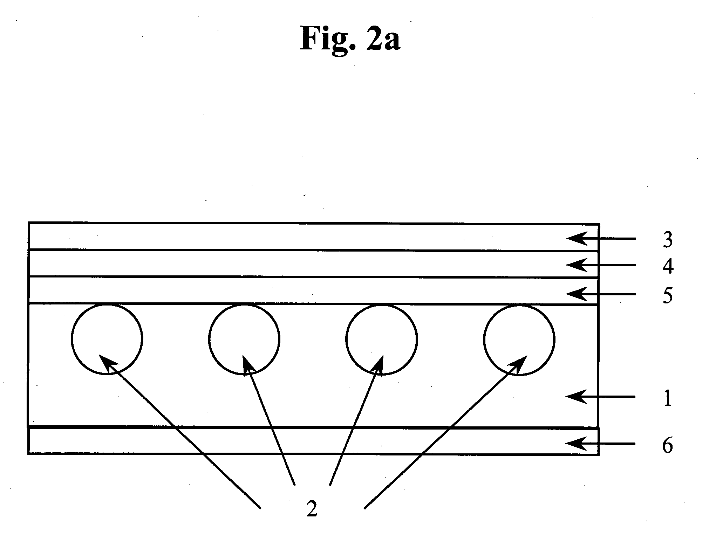

Die Figuren 2a bis 2c zeigen verschiedene Ausführungsformen des erfindungsgemäßen Absorberbauteils. Die von der Wärmeträgerflüssigkeit durchströmten Rohre 2 sind in eine Schicht 1 aus Graphitexpandat eingebettet. Die der Sonneneinstrahlung zugewandte Oberfläche der Schicht 1 weist eine Absorberschicht 3 auf.

Die Funktion der Schicht 1 besteht darin, die Wärme von der Absorberschicht 3 auf die Rohre 2 zu übertragen. Daher ist es erforderlich, dass das Graphitexpandat sowohl von der angrenzenden Absorberschicht 3 in die Schicht 1 hinein (d.h. senkrecht zur Schichtebene) als auch hin zu den Rohrwänden (d.h. im wesentlichen parallel zur Schichtebene) eine hinreichende Wärmeleitfähigkeit aufweist.

Zwischen der Absorberschicht 3 und der Schicht 1 können optional weitere Funktionsschichten 4 oder/und 5 vorgesehen werden, deren Funktion weiter unten erläutert wird. Ebenfalls optional ist eine Schicht 6 aus einem wärmedämmenden Material an der der Sonneneinstrahlung abgewandten Oberfläche (Rückseite) der Schicht 1.

Graphit ist aufgrund seines Aufbaus aus übereinander liegenden Schichten durch eine starke Anisotropie der Leitfähigkeit gekennzeichnet; die elektrische und thermische Leitfähigkeit entlang den Schichten ist deutlich größer als quer zu den Schichten. Diese Anisotropie ist um so ausgeprägter, je stärker verdichtet der Graphit ist, d.h. je mehr die Schichten parallel ausgerichtet sind. Erfährt der Graphit jedoch nur eine geringe Verdichtung, so sind die einzelnen Plättchen nicht vollständig parallel ausgerichtet, so dass die Anisotropie der Leitfähigkeit weniger stark ausgeprägt ist.

Die Herstellung von expandiertem Graphit ist bekannt. Graphiteinlagerungsverbindungen (Graphitsalze), z.B. Graphithydrogensulfat oder Graphitnitrat, werden schockartig in einem Ofen oder mittels Mikrowellen erhitzt. Dabei vergrößert sich das Volumen der Partikel um den Faktor 200 bis 400, und die Schüttdichte sinkt auf 2 bis 20 g/l. Das so erhaltene Graphitexpandat besteht aus wurm- oder ziehharmonikaförmigen Aggregaten. Wird das Graphitexpandat wieder verdichtet, so verhaken sich die einzelnen Aggregate untereinander zu einem festen Verbund, so dass ohne Binderzusatz selbsttragende Flächengebilde, z.B. Folien oder Bahnen, oder Formkörper, z.B. Platten, hergestellt werden können. Eine alternative, ebenfalls aus dem Stand der Technik bekannte Möglichkeit zur Herstellung von Formkörpem aus Graphitexpandat besteht darin, die thermische Expansion der Graphiteinlagerungsverbindung bzw. des Graphitsalzes in einem entsprechend ausgelegten Formwerkzeug durchzuführen. Dabei ist zu beachten, dass das Formwerkzeug das Entweichen von Gasen zulassen muss.

Die Anforderungen an die Reinheit des Graphitexpandats für das erfindungsgemäße Bauteil sind in etwa vergleichbar mit denen für bekannte Anwendungen von Graphitexpandat wie beispielsweise in der Dichtungstechnik. Hier wird üblicherweise Material mit einem Kohlenstoffgehalt von mindestens 98 % verwendet. Für das erfindungsgemäße Bauteil kann aber auch Graphitexpandat mit geringerem Kohlenstoffgehalt von ca. 90 % verwendet werden.

Zur Herstellung der Schicht 1 wird der expandierte Graphit relativ wenig verdichtet und weist daher nur eine relativ schwache Anisotropie der Wärmeleitfähigkeit auf. Bei der Einstellung der Verdichtung ist ein Kompromiss zu treffen zwischen der Forderung nach geringer Anisotropie einerseits, wofür eine möglichst niedrige Verdichtung nötig ist, und der Forderung nach mechanischer Festigkeit andererseits, die bei zu geringer Verdichtung nicht mehr zuverlässig gegeben ist. Für den erfindungsgemäßen Einsatz in Flachkollektoren haben sich Schichten 1 aus Graphitexpandat mit einer Dichte zwischen 0,02 und maximal 0,5 g/cm³ als besonders geeignet erwiesen.

Für die Herstellung des erfindungsgemäßen Absorberbauteils stehen verschiedene Methoden zur Verfügung.

Nach der ersten Methode wird durch thermische Expansion einer expandierbaren Graphiteinlagerungsverbindung erhaltenes Graphitexpandat zu einem flächigen Gebilde verdichtet. Die Verdichtung kann diskontinuierlich oder kontinuierlich erfolgen. Bei der diskontinuierlichen Arbeitsweise werden einzelne Flächengebilde aus verdichtetem Graphitexpandat erhalten. Bevorzugt werden endkonturnahe Flächengebilde geformt, d.h. Platten mit den für das Absorberbauteil gewünschten Abmessungen. Anderenfalls müssen die erhaltenen Flächengebilde auf die gewünschten Abmessungen zurecht geschnitten werden. Bei der kontinuierlichen Arbeitsweise erfolgt die Verdichtung in einer Walzenstraße oder in einem Kalander. Dabei wird eine endlose Bahn aus verdichtetem Graphitexpandat erhalten, aus der Platten mit den gewünschten Abmessungen geschnitten werden.

Solche Platten aus verpresstem Graphitexpandat bilden in einer ersten Variante der Erfindung die Schicht 1 des erfindungsgemäßen Absorberbauteils. Aufgrund seiner geringen Verdichtung besitzt das Plattenmaterial eine erhebliche Kompressionsreserve und ist leicht formbar. Daher lassen sich die Rohre 2 für die Wärmeträgerflüssigkeit leicht in die Plattenoberfläche hinein pressen. Graphitexpandat zeichnet sich durch eine hohe Anpassungsfähigkeit an benachbarte Oberflächen aus, so dass ein enger Anschluss und damit ein geringer Wärmeübergangswiderstand zwischen Plattenmaterial und Rohrwand gewährleistet ist.

Durch das Einpressen der Rohre erfährt das Plattenmaterial eine Verdichtung. Die Platte sollte daher hinsichtlich der Kompaktierung des Graphitexpandats so beschaffen sein, dass die Dichte der Platte nach Einpressen der Rohre zwischen 0,02 und 0,5 g/cm³ liegt.

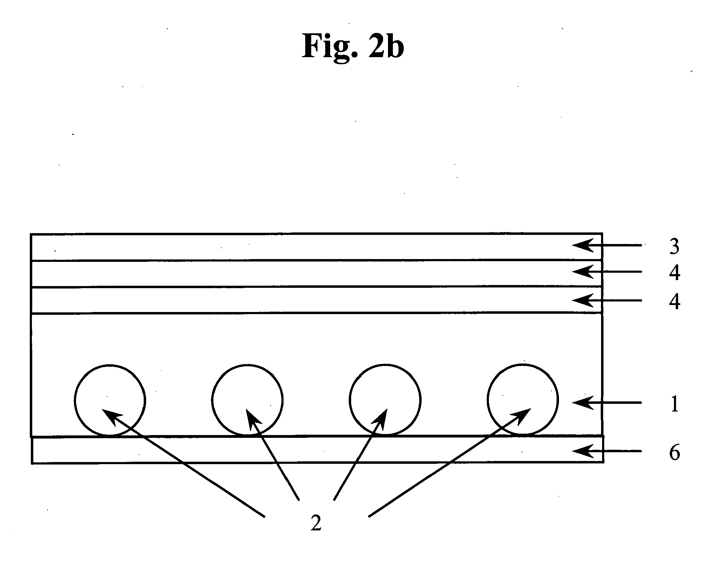

Die Rohre 2 lassen sich so tief in die Platte einpressen, dass sie bündig mit der Plattenoberfläche abschließen. Diese Ausführungsform wird in den Figuren 2a und 2b gezeigt. In der in Figur 2a gezeigten Ausführungsform sind die Rohre 2 in die der Sonneneinstrahlung zugewandte Oberfläche der Platte eingepresst worden. Zwischen Absorberschicht 3 und

Plattenoberfläche können optional weitere Funktionsschichten 4 oder/und 5 vorgesehen werden, deren Funktion weiter unten erläutert wird.

Im Gegensatz dazu werden in der Ausführungsform nach Figur 2b die Rohre 2 in die der Sonneneinstrahlung abgewandte Oberfläche (Rückseite) der Platte einpresst. Der Vorteil dieser Ausführungsform besteht darin, dass für den Auftrag der Absorberschicht 3 an der der Sonneneinstrahlung zugewandten Plattenoberfläche eine geschlossene, durchgehende Fläche zur Verfügung steht. Andererseits ist in dieser Ausführungsform der durch Wärmeleitung quer zur Plattenebene zu überwindende Abstand zwischen Absorberschicht 3 und Rohren 2 größer als in der Ausführungsform nach Figur 2a. Daher sollte die zwischen den Rohren 2 und der Absorberschicht 3 verbleibende Graphitschicht so dünn wie möglich sein, jedoch ist aus Stabilitätsgründen eine Restdicke von 1 bis 2 mm erforderlich. Die Einbettung der Rohre in die Plattenrückseite wird vorzugsweise in solchen Fällen angewendet, wenn auf die den Abstand zwischen Rohren 2 und Absorberschicht 3 vergrößernden optionalen Funktionsschichten 4 und 5 verzichtet werden kann.

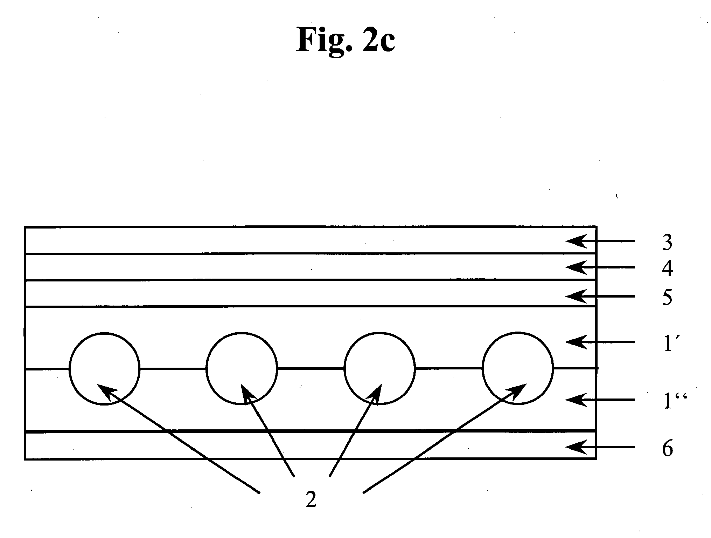

Alternativ können die Rohre auch zwischen zwei übereinander liegende Schichten 1', 1 " aus Graphitexpandat gelegt werden, die anschließend zusammengepresst werden. Die Schicht 1 besteht hier aus den zwei übereinander liegenden, aneinander gepressten Schichten 1', 1", zwischen denen die Rohre 2 eingebettet sind (Figur 2c). Es hat sich gezeigt, dass solche Verbundkörper aus zwei zusammengepressten Platten 1', 1" aus Graphitexpandat sehr stabil sind, sie lassen sich an der Grenzfläche der Platten 1', 1" nicht wieder trennen.

Platten aus Graphitexpandat lassen sich typischerweise mit Dicken zwischen 2 und 50 mm fertigen. Im erfindungsgemäßen Absorberbauteil richtet sich die Wahl der Plattendicke im wesentlichen nach dem Durchmesser der einzubettenden Rohre und soweit erforderlich nach Stabilitätsanforderungen. Außerdem ist zu berücksichtigen, ob die Einbettung der Rohre entsprechend Figur 2a oder 2b in die Oberfläche einer Platte vorgenommen werden soll oder zwischen zwei Platten 1', 1" entsprechend Figur 2c. Beispielsweise ist für die Einbettung von Rohren mit 10 mm Durchmesser, die in Flachkollektoren nach dem Stand der Technik verwendet werden, eine Platte mit einer Dicke von 11 bis 20 mm geeignet, bzw. ein Paar von Platten 1', 1" mit einer Dicke von je 5,5 bis 10 mm.

In einer alternativen Methode wird die Schicht 1 durch thermische Expansion von expandierbaren Graphiteinlagerungsverbindungen (Graphitsalzen) in einem entlüftbaren Formwerkzeug gebildet, in welchem auch die Rohre eingelegt sind. Entweder werden erst die Rohre in die Form eingelegt und die Form wird anschließend mit der expandierbaren Graphiteinlagerungsverbindung gefüllt, oder die Form wird erst zumindest teilweise gefüllt, und anschließend werden die Rohre 2 eingelegt. Die Aufheizung erfolgt bei dieser Verfahrensweise wegen der thermischen Trägheit des Formwerkzeugs bevorzugt mittels Mikrowellen. Die Schicht 1 dieser Variante des erfindungsgemäßen Absorberbauteils besteht aus im Formwerkzeug mit darin eingelegten Rohren 2 expandiertem Graphit.

In einer dritten Variante schließlich wird die Schicht 1 direkt in der Kollektorwanne durch thermische Expansion einer expandierbaren Graphiteinlagerungsverbindung erzeugt. Dazu wird der Boden der Kollektorwanne zuerst mit der expandierbaren Graphiteinlagerungsverbindung aufgefüllt, und anschließend werden die Rohre 2 eingelegt. Die für die thermische Expansion nötige Aufheizung erfolgt bevorzugt mittels Mikrowellen. Die Schicht 1 dieser Variante des erfindungsgemäßen Absorberbauteils besteht aus in der Kollektorwanne mit darin eingelegten Rohren 2 expandiertem Graphit.

Die in das Formwerkzeug bzw. die Kollektorwanne eingefüllte Menge an expandierbarer Graphiteinlagerungsverbindung ist so zu dosieren, dass nach der Expansion ein Material mit einer Dichte im Bereich von 0,02 bis 0,5 g/cm³ vorliegt.

Für die Fertigung der Rohre 2 sind die aus Solarkollektoren nach dem Stand der Technik bekannten Materialien anwendbar, d.h. im wesentlichen Kupfer. Dank der hohen Wärmeleitfähigkeit des die Rohre umgebenden Graphitexpandats und der großen, für die Wärmeübertragung zwischen dem Graphitexpandat der Schicht 1 und den Rohren 2 zur, Verfügung stehenden Fläche kann in dem erfindungsgemäßen Absorberbauteil auch eine geringere Wärmeleitfähigkeit des Rohrmaterials in Kauf genommen werden. So lässt sich beispielsweise auch mit Kunststoffrohren ein ausreichender Wärmeübergang erzielen. Die Möglichkeit, die relativ teuren Kupferrohre durch ggf. billigere und leichter verarbeitbare Rohre aus nichtmetallischen Werkstoffen, z.B. aus Kunststoff, zu ersetzen, ist ein weiterer Vorteil der vorliegenden Erfindung gegenüber dem Stand der Technik.

Die Anordnung der Rohre in der Schicht 1 kann entsprechend aus dem Stand der Technik bekannten Mustern erfolgen, beispielsweise als Mäander oder als Harfe.

Die der Sonneneinstrahlung abgewandte Oberfläche der Schicht 1 wird optional mit einer Rückwand 6 aus einem wärmedämmenden Material versehen. Geeignet hierfür sind beispielsweise Schichten, welche Mineralfasern, Polyurethanschaum oder Gipskarton enthalten. Die Anbringung der Rückwand 6 an die der Sonneneinstrahlung abgewandte Seite der Schicht 1 erfolgt mittels Kleben oder Aufpressen. Das Aufpressen der Rückwand 6 und das Einpressen der Rohre 2 kann in einem Arbeitsschritt geschehen, wenn die mechanische Stabilität des wärmedämmenden Materials dies zulässt.

Die der Sonneneinstrahlung zugewandte Oberfläche der Schicht 1 ist mit einer Absorberschicht 3 versehen. Herstellung, Aufbau und Zusammensetzung derartiger Absorberschichten 3 sind in der Fachwelt bekannt, geeignete Materialien sind kommerziell erhältlich.

Beispielsweise enthält die Absorberschicht 3 einen Absorberlack. Nach dem Stand der Technik wird meist vor dem Auftrag des Absorberlacks auf Absorberbleche B eine Grundierung aufgetragen. Versuche haben aber gezeigt, dass sich in den erfindungsgemäßen Absorberbauteilen auch ohne Grundierung durch Aufsprühen oder Aufrollen eines Absorberlacks eine deckende und haftende Lackschicht auf die Oberfläche der Schicht 1 auftragen lässt.

Bevorzugt enthält die Absorberschicht 3 anstelle eines Absorberlacks selektiv absorbierende keramische Absorptionsmaterialien, welche einen hohen Absorptionsgrad (mindestens 95 %) im Wellenlängenbereich des sichtbaren Lichtes, jedoch nur einen geringen Absorptionsgrad (um 5 %) im IR-Bereich aufweisen. Dank der geringen Absorptionsfähigkeit im IR-Bereich sind bei diesen Materialien die Verluste durch abgestrahlte Wärme geringer als bei den nicht wellenlängenspezifisch absorbierenden Absorberlacken.

Bei Verwendung keramischer Absorptionsmaterialien ist es unter Umständen vorteilhaft, zwischen der zu beschichtende Oberfläche der Schicht 1 und der Absorberschicht 3 eine Haftvermittlerschicht 4 aus Metall oder einem nichtmetallischen anorganischen Material, z.B. einem keramischen Material wie Silicumcarbid, oder aus Glaskohlenstoff oder sog. "diamond-like carbon" (DLC) vorzusehen. Ob eine Haftvermittlerschicht vorteilhaft oder sogar erforderlich ist, richtet sich nach den zu verwendenden Absorptionsmaterialien.

Es gibt verschiedenen Varianten, auf der Oberfläche der Schicht 1 eine als Haftvermittlerschicht 4 geeignete metallische Beschichtung zu erzeugen. Beispielsweise kann unter Ausnutzung der elektrischen Leitfähigkeit des Graphitexpandats galvanisch eine Metallschicht aus einem geeigneten Elektrolytbad auf der Oberfläche der als Kathode geschalteten Schicht 1 abgeschieden werden. Alternative Verfahrensweisen, beispielsweise für Schichten aus Metallen, die aus wässriger Lösung nicht galvanisch abgeschieden werden können, oder für nichtmetallische Materialien bestehen in der Sputtertechnik, dem Aufdampfen, oder der chemischen Abscheidung. Keramische Schichten können auch durch die Pyrolyse von dünnen Filmen aus organischen Precursor-Verbindungen hergestellt werden. Die Haftvermittlerschichten 4 werden beispielsweise durch galvanische Abscheidung von Kupfer oder Aufsputtem von Aluminium auf die Oberfläche der Schicht 1 hergestellt. Die Dicke der Haftvermittlerschicht 4 beträgt weniger als 100 µm, bevorzugt zwischen 0,1 und 50 µm.

Auf dieser Haftvermittlerschicht 4 wird die keramische Absorberschicht 3 aufgetragen, beispielsweise durch Sputtern oder Aufdampfen oder andere aus dem Stand der Technik bekannte Verfahren. Die Dicke der Absorberschicht 3 richtet sich nach der Zusammensetzung und den daraus resultierenden Absorptions- und Emissionseigenschaften der verwendeten Absorptionsmaterialien.

Die Schichten 3 und 4 werden beispielsweise auf eine Schicht 1 aufgetragen, in der bereits die Rohre 2 eingebettet sind. Alternativ kann bei der Fertigung des Absorberbauteils zuerst ein Halbzeug hergestellt werden, indem die der Sonneneinstrahlung zugewandte Oberfläche der Schicht 1 mit der Absorberschicht 3, ggf. mit Haftvermittlerschicht 4 versehen wird. In die Graphitexpandatschicht 1 dieses Halbzeugs werden anschließend die Rohre 2 eingebettet. Damit beim Einbetten der Rohre die Beschichtung nicht beschädigt wird, wird die Absorberschicht 3 möglichst durch das Aufbringen einer Schutzfolie oder andere geeignete Maßnahmen geschützt.

Eine besonders vorteilhafte Variante der vorliegenden Erfindung ist dadurch gekennzeichnet, dass zwischen der der Sonneneinstrahlung zugewandten Oberfläche der Schicht 1 aus Graphitexpandat und der Absorberschicht 3 eine Schicht 5 zur lateralen Wärmeverteilung vorgesehen ist. Besonders zweckmäßig für die Bildung der Schicht 5 ist Graphitfolie, denn diese zeichnet sich durch eine bevorzugte Wärmeleitung in der Ebene aus und ist daher sehr gut geeignet, um die aus der Absorberschicht 3 abzuführende Wärme lateral gleichmäßig zu verteilen.

Graphitfolie wird ebenso wie die vorstehend beschriebenen Platten durch Verdichten von Graphitexpandat hergestellt, jedoch ist der Verdichtungsgrad des Graphitexpandats in Graphitfolie höher. Die Dichte der erfindungsgemäß verwendeten Graphitfolien beträgt mindestens 0,5 g/cm³, bevorzugt mindestens 0,7 g/cm³. Mit praktisch anwendbaren Drücken ist eine Verdichtung auf bis zu 2,0 g/cm³ möglich, die theoretische Obergrenze ist durch die Dichte von ideal strukturiertem Graphit bei 2,25 g/cm³ gegeben. Besonders bevorzugt ist Graphitfolie mit einer Dichte zwischen 1,0 und 1,8 g/cm³. Durch die höhere Verdichtung sind die Schichtebenen in Graphitfolie wesentlich stärker parallel orientiert als in dem weniger verdichteten Graphitexpandat der Schicht 1, und daraus resultiert die stärker ausgeprägte Anisotropie der Wärmeleitung in Graphitfolie.

Wegen der relativ geringen Wärmeleitfähigkeit in Dickenrichtung ist es erforderlich, dass die der lateralen Wärmeverteilung dienende Graphitfolie möglichst dünn ist. Die Dicke der Folie sollte 1,5 mm nicht überschreiten, bevorzugt ist die Folie in Schicht 5 dünner als 0,7 mm.

Die Oberfläche der Schicht 1, in der ggf. bereits die Rohre 2 eingebettet sind, und die die Schicht 5 bildende Graphitfolie werden miteinander durch Laminieren oder Verkleben mit einem geeigneten, d.h. bei der Betriebstemperatur des Kollektors dauerhaft beständigen Klebemittel verbunden. Geeignete wärmebeständige Kleber, beispielsweise auf der Basis von Acrylatharzen, Epoxydharzen, Polyurethanen oder Cyanacrylat sind kommerziell erhältlich.

Zweckmäßigerweise wird ein geklebter Verbund vor dem Einsatz mindestens auf Betriebstemperatur erhitzt und solange auf dieser Temperatur gehalten, bis eventuelle Ausgasungsprozesse des Klebemittels, die den Betrieb des Kollektors beeinträchtigen würden, zum Erliegen gekommen sind.

Besonders geeignet für die Herstellung der Verbindung zwischen der Oberfläche der Schicht 1 und der die Schicht 5 bildende Graphitfolie sind leitfähige Klebemittel, d.h. Klebemittel, welche leitfähige Partikel enthalten. Derartige Klebemittel sind insbesondere für die Herstellung elektronisch leitender Klebeverbindungen gebräuchlich und kommerziell erhältlich. Da im allgemeinen solche Zusätze, welche elektrische Leitfähigkeit aufweisen, wie z.B. Ruß oder Metallpulver, sich auch durch hohe thermische Leitfähigkeit auszeichnen, sind diese Klebemittel auch geeignet, die thermische Leitfähigkeit der Klebeverbindung zu verbessern. Es können aber auch andere wärmeleitfähige Zusätze benutzt werden. Eine thermisch leitfähige Verbindung lässt sich auch herstellen, indem einem aufgrund seiner thermischen Beständigkeit zwar geeigneten, aber selbst nur wenig thermisch leitfähigen Klebemittel Partikel mit hoher thermischer Leitfähigkeit zugesetzt werden, z.B. Graphitflocken oder durch Zermahlen von Graphitfolie erhaltene Partikel.

Alternativ wird als Klebemittel ein Harz oder Bindemittel verwendet, das nach dem Verbinden von Graphitschicht 1 und Graphitolie pyrolysiert (carbonisiert) wird. Die nach der Pyrolyse verbleibenden Rückstände bilden thermisch leitfähige Kohlenstoffbrücken zwischen den aneinander grenzenden Oberflächen der Schicht 1 und der die Schicht 5 bildenden Folie. Geeignete carbonisierbare, d.h. unter Zurücklassen einer hohen Kohlenstoffausbeute pyrolysierbare Harze bzw. Bindemittel sind beispielsweise Phenolharze, Epoxidharze, Furanharze, Polyurethanharze und Peche. Ein weiterer Vorteil dieser Variante besteht darin, dass bei der Pyrolyse sämtliche flüchtigen Bestandteile des Harzes ausgetrieben werden, so dass beim Kollektorbetrieb keine Gefahr des Ausgasens mehr besteht. Wegen der hohen thermischen Belastung bei der Pyrolyse ist diese Methode nur anwendbar, wenn die Rohre 2 noch nicht in der Schicht 1 eingebettet sind.

Anstelle herkömmlicher Klebemittel können auch grenzflächenaktive Substanzen aus der Gruppe siliciumorganische Verbindungen, perfluorierte Verbindungen, Seifen der Metalle Natrium, Kalium, Magnesium, Calcium verwendet werden, die in dünner Schicht (10 bis 1000 nm, bevorzugt 100 bis 500 nm) auf eine der zu verbindenden Oberflächen aufgetragen werden. Die zu verbindenden Flächen werden miteinander in Kontakt gebracht und bei einer Temperatur zwischen 30 und maximal 400 °C und einem Pressdruck von 1 bis 200 MPa miteinander verbunden. Versuche haben gezeigt, dass dieses in der Patentschrift EP 0 616 884 B1 insbesondere für die Herstellung von Verbindungen zwischen Graphitfolien- und Metalloberflächen beschriebene Verfahren auch für das Verbinden zweier Graphitoberflächen geeignet ist. Wenn dieses Verfahren angewendet wird, müssen die Rohre 2 gleichzeitig in die Schicht 1 eingepresst werden, da diese sonst zu stark verdichtet wird.

Anschließend werden in die Schicht 1 die Rohre 2 eingebettet, falls dies nicht schon vor dem oder im Verbindungsprozess geschehen ist, und die nach außen weisende, der Sonneneinstrahlung zugewandte Oberfläche der die Schicht 5 bildenden Graphitfolie wird in derselben Weise wie oben für die Oberfläche der Schicht 1 beschrieben mit einer Absorberschicht 3 versehen. Bei Verwendung eines Absorberlackes ist eine Grundierung nicht zwingend erforderlich. Für die Applikation keramischer Absorptionsmaterialien wird, falls erforderlich, zwischen der Oberfläche der Graphitfolie 5 und der Absorberschicht 3 eine Haftvennittlerschicht 4 vorgesehen.

Alternativ kann auch zuerst ein Halbzeug hergestellt werden, indem die der Sonneneinstrahlung zugewandte Oberfläche der Folie der Schicht 5 mit der Absorberschicht 3, ggf. mit Haftvermittlerschicht 4, versehen wird. Anschließend wird die unbeschichtete Oberfläche der Folie mit der entsprechenden Oberfläche der Schicht 1, die optional schon die Rohre 2 enthält, verbunden. Damit beim Laminieren oder Kleben und anschließenden Pressen sowie ggf. noch nötigen Einbetten der Rohre die Beschichtung der Folie 5 nicht beschädigt wird, wird die Absorberschicht 3 möglichst durch das Aufbringen einer Schutzfolie oder andere geeignete Maßnahmen geschützt.

Ein weiterer Vorteil der Beschichtung der Oberfläche der Schicht 1 mit einer Schicht 5 aus Graphitfolie besteht darin, dass Graphitfolie aufgrund der höheren Verdichtung des Graphitexpandats weniger porös ist als das geringer verdichtete Graphitexpandat der Schicht 1, und daher eine geschlossene, relativ glatte Oberfläche aufweist. Dadurch wird gewährleistet, dass das gesamte aufgetragene Absorptionsmaterial an der Oberfläche verbleibt, wo es von der Sonneneinstrahlung erreicht wird und wirksam ist. Bei einer porösen Oberfläche hingegen sinkt ein Teil des aufgetragenen Absorptionsmaterials in die oberflächennahen Poren, wo es kaum noch von der Sonneneinstrahlung erreicht werden kann und daher unwirksam ist. Es ist zwar möglich, die Poren der Oberfläche der Schicht 1 mit der vor der Absorberschicht 3 aufzutragenden Grundierung bzw. dem Haftvermittler aufzufüllen und so die Oberfläche der Schicht 1 zu glätten. Dies erfordert jedoch größere Mengen an Haftvermittler bzw.

Grundierungsmittel und größeren Aufwand für die Schichtherstellung als bei der Beschichtung einer glatten Oberfläche nötig.

Die Rauhigkeit der Oberfläche der Schicht 1 lässt sich andererseits dadurch verringern, dass beim Verdichten des Graphitexpandats ein Kalander mit einer Walze sehr geringer Oberflächenrauhigkeit benutzt wird.

Alternativ zu Graphitfolie kann auf die der Sonneneinstrahlung zugewandte Oberfläche der Schicht 1 eine Metallfolie als Funktionsschicht 5 für die laterale Wärmeverteilung auflaminiert oder aufgeklebt werden. Auch eine durch galvanische Abscheidung hergestellte Metallschicht oder eine durch chemische Abscheidung, Sputtern oder Aufdampfen erzeugte Metall- oder Keramikschicht ist geeignet zur lateralen Wärmeverteilung. Geeignete keramische Materialien für die Schicht 5 zur lateralen Wärmeverteilung sind beispielsweise Siliciumcarbid, Aluminiumnitrid und Aluminiumoxid. Keramische Schichten 5 können auch durch Pyrolyse von dünnen Filmen aus organischen Precursor-Verbindungen hergestellt werden. Beispiel für keramische Schichten 5 aus pyrolysierten organischen Vorläufern sind Siliciumdioxid-, Siliciumcarbid oder Siliciumcarbonitrid-Schichten aus pyrolysierten Polysilanen oder Polysilazanen.

Ggf. wird durch eine solche Metall- oder Keramikschicht gleichzeitig die Funktion der Haftvermittlung für die Absorberschicht erfüllt.

Gegenstand der vorliegenden Erfindung ist ferner die Bereitstellung von Schichtverbund-Halbzeugen für die erfindungsgemäßen Absorberbauteile. Diese Halbzeuge umfassen eine Absorberschicht 3 auf einer Schicht 1 aus Graphitexpandat mit einer Dichte zwischen 0,02 g/cm³ und 0,5 g/cm³ oder auf einer Graphitfolie 5 mit einer Dichte von mindestens 0,5 g/cm³, bevorzugt zwischen 1,0 und 1,8 g/cm³, oder eine Absorberschicht 3 auf einem Schichtverbund aus Graphitfolie 5 und Graphitexpandatschicht 1, wobei sich die Graphitfolie 5 zwischen der Absorberschicht 3 und der Schicht 1 aus Graphitexpandat befindet. Die Verbindung von Graphitfolie 5 und Schicht 1 erfolgt mittels einer der bereits vorstehend für die Herstellung des Absorberbauteils beschriebenen Methoden.

Falls erforderlich, enthält das Halbzeug zwischen Absorberschicht 3 und Graphitfolie 5 bzw. Graphitexpandatschicht 1 eine Haftvermittlerschicht 4.

Die Einsatzmöglichkeiten der erfindungsgemäßen Halbzeuge sind nicht auf thermosolare Flachkollektoren begrenzt. Die Halbzeuge können z.B. auch in Anlagen zur Abfuhr von Prozesswärme, zur Kühlung von Maschinen oder zur Strahlungsbeheizung oder -kühlung von Büro-/Wohnräumen verwendet werden.

Durch Beschichtung mit einem Absorberlack verbessert sich die Leistung von Wärmezufuhr- oder Wärmeabfuhrbauteilen aus Graphitexpandat je nach Oberflächenbeschaffenheit des Ausgangsmaterials um 25 bis 100 % (siehe auch das folgende Ausführungsbeispiel). Bei einer Raumtemperatur von 25 °C und einer Vorlauftemperatur von 40 °C (typischer Wert für Niedertemperaturheizungen) lassen sich so Heizleistungen von bis zu 100 W/m² erreichen bzw. bei einer Raumtemperatur von 25 °C und einer Vorlauftemperatur von 15 °C Kühlleistungen von ca. 55 W/m². Die Strahlungskühlung ist vor allem für höhere Temperaturen interessant. Bei einer Umgebungstemperatur von 25 °C und einer Kühlkörpertemperatur von 100°C ergibt sich eine Kühlleistung von 640 W/m², bei einer Kühlkörpertemperatur von 200 °C eine Leistung von 2400 W/m². Der zusätzliche Effekt der Konvektion ist hierbei nicht berücksichtigt, so dass vor allem bei niedrigeren Temperaturdifferenzen höhere Heiz- oder Kühlleistungen erreicht werden können.

### Ausführungsbeispiel

Eine Platte aus verpresstem expandiertem Graphit der Dichte 0,15 g/cm³ (Probe 1), eine Graphitfolie der Dichte 1,0 g/cm³ (Probe 2) und eine Graphitfolie der Dichte 1,8 g/cm³ (Probe 3) wurden mit dem Absorberlack Velvet-Coating 811-21 der Firma Nextel beschichtet. Auf allen Proben konnte durch Aufrollen mit einer Fellrolle eine gleichmäßig dicke, deckende Lackschicht mit ausreichender Haftung erzeugt werden. Eine Grundierung oder Haftvermittlerschicht war nicht notwendig. Die aufgetragene Lackmenge betrug jeweils ca. 40 g/m². An allen Proben wurde der Absorptionskoeffizient im sichtbaren Wellenlängenbereich und die Wärmeleitfähigkeit parallel zu Platten- bzw. Folienebene bestimmt. Die Ergebnisse sind in der folgenden Tabelle zusammengefasst:

| Probe | Dichte | Absorptionskoeffizient | Wärmeleitfähigkeit |
|---|---|---|---|
| | [g/cm³] | [%] | [W/(m·K)] |
| 1 | 0,15 | 97 | 25 |
| 2 | 1,0 | 97 | 200 |
| 3 | 1,8 | 97 | 450 |

Alle Proben wiesen mit 97 % einen sehr hohen Absorptionskoeffizienten auf. Im Gegensatz dazu liegt der Absorptionskoeffizient von nicht beschichteten Platten aus verpresstem expandiertem Graphit bei unter 80 %, der von nicht beschichteter Graphitfolie noch darunter (< 50 %). Für thermische Solaranwendungen wird typischerweise ein Absorptionskoeffizient im sichtbaren Bereich des Spektrums von mindestens 95 % verlangt.

Die Wärmeleitfähigkeit in der Folienebene der Probe 2 liegt mit 200 W/(m·K) etwa im Bereich der Wärmeleitfähigkeit von Aluminium (ca. 220 W/(m·K)), die der Probe 3 mit 450 W/(m·K) über der von Kupfer (ca. 400 W/(m·K)). Die Graphitfolien sind also hinsichtlich ihrer Fähigkeit, die Wärme lateral zu verteilen, mit Kupfer bzw. Aluminium vergleichbar.

## Patentansprüche

1. Absorberbauteil für einen thermosolaren Flachkollektor, **dadurch gekennzeichnet, dass** die Wärmeträgerrohre (2) in eine Schicht (1) aus Graphitexpandat eingebettet sind und die der Sonneneinstrahlung zugewandte Oberfläche der Schicht (1) eine Absorberschicht (3) aufweist.

2. Absorberbauteil nach Anspruch 1, **dadurch gekennzeichnet, dass** die Dichte des Graphitexpandats in Schicht (1) im Bereich von 0,02 g/cm³ bis 0,5 g/cm³ liegt.

3. Absorberbauteil nach Anspruch 1, **dadurch gekennzeichnet, dass** die Schicht (1) aus zu einer Platte verpresstem Graphitexpandat besteht.

4. Absorberbauteil nach Anspruch 3, **dadurch gekennzeichnet, dass** die Rohre (2) in die der Sonneneinstrahlung zugewandte Oberfläche der Schicht (1) eingebettet sind und bündig mit dieser Oberfläche abschließen oder in die der Sonneneinstrahlung abgewandte Oberfläche der Schicht (1) eingebettet sind und bündig mit dieser Oberfläche abschließen.

5. Absorberbauteil nach Anspruch 1, **dadurch gekennzeichnet, dass** die Schicht (1) aus zwei übereinander liegenden, aneinander gepressten Schichten (1', 1 ") besteht, zwischen denen die Rohre (2) eingebettet sind.

6. Absorberbauteil nach Anspruch 1, **dadurch gekennzeichnet, dass** die Schicht (1) aus in einem Formwerkzeug, in welchem die Rohre (2) eingelegt waren, expandiertem Graphit besteht.

7. Absorberbauteil nach Anspruch 1 **dadurch gekennzeichnet, dass** die Schicht (1) aus in der Kollektorwanne, in welche die Rohre (2) eingelegt waren, expandiertem Graphit besteht.

8. Absorberbauteil nach einem der vorhergehenden Ansprüche, **dadurch gekennzeichnet, dass** die Absorberschicht (3) einen Absorberlack oder ein selektiv absorbierendes keramisches Material enthält.

9. Absorberbauteil nach einem der vorhergehenden Ansprüche, **dadurch gekennzeichnet, dass** die Rohre (2) aus einem nichtmetallischen Werkstoff, insbesondere aus einem Kunststoff bestehen.

10. Absorberbauteil nach einem der vorhergehenden Ansprüche, **dadurch gekennzeichnet, dass** die der Sonneneinstrahlung abgewandte Oberfläche der Schicht (1) eine wärmedämmende Schicht (6) aufweist.

11. Absorberbauteil nach Anspruch 10, **dadurch gekennzeichnet, dass** die wärmedämmende Schicht (6) Mineralfaserplatten, Polyurethanschaum oder Gipskarton enthält.

12. Absorberbauteil nach einem der vorhergehenden Ansprüche, **dadurch gekennzeichnet, dass** zwischen der der Sonneneinstrahlung zugewandten Oberfläche der Schicht (1) und der Absorberschicht (3) eine Schicht (5) zur lateralen Wärmeverteilung vorgesehen ist.

13. Absorberbauteil nach Anspruch 12, **dadurch gekennzeichnet, dass** die Schicht (5) eine aufgedampfte, aufgesputterte oder galvanisch oder chemisch abgeschiedene Metallschicht, eine Metallfolie oder eine Graphitfolie ist.

14. Absorberbauteil nach Anspruch 12, **dadurch gekennzeichnet, dass** die Schicht (5) eine aufgedampfte, aufgesputterte oder durch Pyrolyse von organischen Precursor-Verbindungen hergestellte Keramikschicht ist.

15. Absorberbauteil nach Anspruch 12, **dadurch gekennzeichnet, dass** die Schicht (5) eine Graphitfolie mit einer Dichte von mindestens 0,5 g/cm³ , bevorzugt mindestens 1 g/cm³ und einer Dicke von höchstens 1,5 mm, bevorzugt höchstens 0,7 cm ist.

16. Absorberbauteil nach Anspruch 15, **dadurch gekennzeichnet, dass** die Graphitfolie der Schicht (5) mit der der Sonneneinstrahlung zugewandten Oberfläche der Schicht (1) durch eines der folgenden Mittel verbunden ist:
- ein Klebemittel
- ein Klebemittel mit darin dispergierten wärmeleitenden Partikeln aus Metall, Ruß, Graphitflocken oder zermahlener Graphitfolie o.a. wärmeleitenden Materialien
- Carbonisierungsrückstände eines Phenolharzes, Expoxidharzes, Polyurethanharzes, Furanharzes, Pechs oder eines anderen carbonisierbaren Harzes oder Bindemittels
- eine grenzflächenaktive Substanz aus der Gruppe aus der Gruppe siliciumorganische Verbindungen, perfluorierte Verbindungen, Seifen der Metalle Natrium, Kalium, Magnesium, Calcium
- eine Laminierung.

17. Absorberbauteil nach einem der vorherigen Ansprüche, **dadurch gekennzeichnet, dass** zwischen der Absorberschicht (3) und der der Sonneneinstrahlung zugewandten Oberfläche der Schicht (1) bzw. zwischen der Absorberschicht (3) und der der Sonneneinstrahlung zugewandten Oberfläche der Schicht (5) eine Haftvermittlerschicht (4) vorgesehen ist

18. Absorberbauteil nach Anspruch 17, **dadurch gekennzeichnet, dass** die Schicht (4) eine aufgedampfte, aufgesputterte, oder galvanisch oder chemisch abgeschiedene Metallschicht oder eine aufgedampfte, aufgesputterte oder durch Pyrolyse von organischen Precursor-Verbindungen hergestellte Keramikschicht ist.

19. Verwendung eines Absorberbauteils nach einem der Ansprüche 1 bis 18 in einem thermosolaren Flachkollektor.

20. Schichtverbund-Halbzeug umfassend eine Schicht (1) aus Graphitexpandat mit einer Dichte zwischen 0,02 g/cm³ und 0,5 g/cm³ und eine Absorberschicht (3).

21. Schichtverbund-Halbzeug umfassend eine Schicht (5) aus Graphitfolie mit einer Dichte zwischen 0,5 und 2,0 g/cm³, bevorzugt zwischen 1,0 und 1,8 g/cm³, und eine Absorberschicht (3).

22. Schichtverbund-Halbzeug umfassend eine Schicht (1) aus Graphitexpandat mit einer Dichte zwischen 0,02 g/cm³ und 0,5 g/cm³, eine Schicht (5) aus Graphitfolie mit einer Dichte zwischen 0,5 und 2,0 g/cm³, bevorzugt zwischen 1,0 und 1,8 g/cm³, und eine Absorberschicht (3).

23. Schichtverbund-Halbzeug nach einem der Ansprüche 20 bis 22, **gekennzeichnet durch** eine Haftverinittlerschicht (4) zwischen der Absorberschicht (3) und der Schicht (1) bzw. zwischen der Absorberschicht (3) und der Graphitfolie (5).

24. Verwendung eines Halbzeuges nach einem der Ansprüche 20 bis 23 in einem Absorberbauteil für einen thermosolaren Flachkollektor.

25. Verwendung eines Halbzeugs nach einem der Ansprüche 20 bis 23 in Anlagen zur Abfuhr von Prozesswärme, zur Kühlung von Maschinen oder zur Strahlungsbeheizung oder Strahlungskühlung.
